# EUROPÄISCHE PATENTSCHRIFT

(11) **EP 4 405 183 B1**
(45) Veröffentlichungstag und Bekanntmachung des Hinweises auf die Patenterteilung: **03.12.2025**
(21) Anmeldenummer: 22772960.5
(22) Anmeldetag: 05.09.2022
(51) Int. Cl.: B60B 3/06

(54) **SCHEIBENRAD FÜR EIN FAHRZEUG**
DISC WHEEL FOR A VEHICLE
ROUE À DISQUE POUR VÉHICULE

(30) Priorität: 21.09.2021 DE 102021124332
(43) Veröffentlichungstag der Anmeldung: 31.07.2024
(73) Patentinhaber: Bayerische Motoren Werke Aktiengesellschaft, 80809 München (DE)
(72) Erfinder: FASCHINGER, Florian, 85748 Garching (DE); ADAM, Andreas, 80999 München (DE)
(86) Internationale Anmeldenummer: PCT/EP2022/074557
(87) Internationale Veröffentlichungsnummer: WO 2023/046442

(56) Entgegenhaltungen:
- EP-A2- 0 826 442
- EP-A2- 0 938 982
- DE-A1- 19 957 255
- FR-A- 393 540
- GB-A- 165 877
- JP-A- S63 258 202
- US-A- 1 596 097

## Beschreibung

Die Erfindung betrifft Scheibenrad für ein, insbesondere einspuriges Kraft-, Fahrzeug, mit einer konzentrisch zu einer Rotationsachse des Scheibenrades angeordneten Radnabe zur Montage des Scheibenrades an dem Fahrzeug, einer dazu ebenfalls konzentrischen Radfelge sowie einer ersten und einer zweiten Radscheibe.

Grundsätzlich haben Scheibenräder eine zwischen der Radnabe und der Radfelge im Wesentlichen geschlossene Fläche und keine Speichen oder Streben mit dazwischenliegenden Öffnungen. Durch die geschlossenen Flächen werden bei Scheibenrädern Luftverwirbelungen reduziert, so dass sie sich positiv auf die Aerodynamik des Fahrzeugs auswirken.

Hierfür ist im Stand der Technik bereits bekannt, Bleche oder andere Materialien vorzusehen, welche jeweils eine geschlossene Fläche zu einer der Seiten des Scheibenrades bereitstellen und sich von der Radfelge zu der Radnabe erstrecken. Um eine ausreichende Stabilität des Scheibenrades zu gewährleisten, werden vergleichsweise dicke Bleche bzw. Materialien gewählt, wodurch sich ein hohes und daher nachteiliges Gewicht der im Stand der Technik bekannten Scheibenräder ergibt.

Zur Gewichtsreduzierung entsprechender Scheibenräder ist aus dem Stand der Technik bereits eine Vielzahl von Scheibenräder für Fahrzeuge sowie für einspurige Kraftfahrzeuge bekannt, bei welchen die Fläche zwischen der Radnabe und der Radfelge nicht geschlossen ist und Speichen oder Streben mit dazwischenliegenden Öffnungen ausgebildet sind. Hierfür sind jedoch ebenfalls vergleichsweise dicke Bleche bzw. Materialien nötig, um eine ausreichende Steifigkeit bzw. Bauteilfestigkeit zu gewährleisten.

Druckschriftlicher Stand der Technik im vorliegenden technischen Gebiet ist in den Dokumenten JP S63 258202 A, GB 165 877 A und FR 393 540 A offenbart.

Es ist daher Aufgabe der vorliegenden Erfindung, ein Scheibenrad für ein Fahrzeug bereitzustellen, bei welchem eine ausreichende Steifigkeit bzw. Bauteilfestigkeit gewährleistet und das Gewicht weiter reduziert ist.

Diese Aufgabe wird durch die Merkmalskombination gemäß Patentanspruch 1 gelöst.

Erfindungsgemäß wird ein Scheibenrad für ein Fahrzeug, insbesondere ein Kraftfahrzeug, vorzugsweise ein einspuriges Kraftfahrzeug, oder ein Fahrrad oder ein Elektrofahrrad, mit einer konzentrisch zu einer Rotationsachse des Scheibenrades angeordneten Radnabe zur Montage des Scheibenrades an dem Fahrzeug, einer dazu ebenfalls konzentrischen Radfelge sowie einer ersten und einer zweiten Radscheibe vorgeschlagen. Dabei sind die erste Radscheibe und die zweite Radscheibe an der Radfelge in eine zu der Rotationsachse des Scheibenrades parallelen Querrichtung zueinander beabstandet ausgebildet und erstrecken sich jeweils von der Radfelge in Richtung der Radnabe. Ferner laufen die Radscheiben in Richtung der Radnabe hin derart aufeinander zu und sind miteinander verbunden, dass zwischen den Radscheiben und der Radfelge zumindest ein Hohlraum ausgebildet ist. Darüber hinaus ist in einem Felgenbett der Radfelge zumindest ein Durchbruch zu dem zumindest einen Hohlraum ausgebildet ist. Das Scheibenrad ist dabei insbesondere als ein Vorderrad oder ein Hinterrad des Fahrzeugs ausgebildet.

Vorteilhaft daran ist, dass zunächst durch den Hohlraum das Gewicht des Scheibenrads reduziert wird. Aufgrund des zumindest einen Durchbruchs ist der Hohlraum strömungstechnisch mit einem auf die Radfelge aufgezogenen Reifen bzw. mit dessen Innenraum verbunden, so dass in dem Hohlraum der Innendruck des Reifens herrscht. Dadurch wird die Steifigkeit des Scheibenrads in diesem Bereich erhöht, wodurch die beiden Radscheiben wiederum schmaler ausgebildet werden können, um das Gewicht weiter zu reduzieren. Außerdem reduziert der zumindest eine Durchbruch zusätzlich das Gewicht des Scheibenrads. Aufgrund des Felgenbettes ist dabei jedoch die Steifigkeit des Scheibenrads vorteilhaft erhöht, im Vergleich zu einer Radfelge mit einem komplett geöffneten Hohlraum.

Erfindungsgemäß ist vorgesehen, dass in dem Felgenbett der Radfelge eine Vielzahl von Durchbrüchen ausgebildet ist. Auf diese Weise ist das Gewicht des Scheibenrads weiter verringert.

Vorzugsweise ist das Scheibenrad derart ausgebildet, dass die Vielzahl von Durchbrüchen in einer Umfangsrichtung des Felgenbetts gleichmäßig zueinander beabstandet angeordnet sind. Weiter vorteilhaft ist es, wenn der jeweilige Durchbruch in Querrichtung mittig in dem Felgenbett ausgebildet ist. Auf diese Weise wird eine durch die Durchbrüche entstehende Unwucht vermieden.

In einer bevorzugten Ausführungsform der Erfindung sind der zumindest eine Hohlraum zwischen den beiden Radscheiben und/oder das Felgenbett in einem Querschnitt v-förmig oder u-förmig ausgebildet sind. Dabei ist günstig, dass ein derartiger Querschnitt eine ausreichende Größe des Hohlraums für die Steifigkeitserhöhung bereitstellt und gleichzeitig der Materialaufwand der entsprechenden Komponenten minimal gehalten ist, wodurch das Gewicht des Scheibenrads optimiert ist. Es sind jedoch auch weitere Querschnittsformen, wie beispielsweise ein kreisförmiger, elliptischer, quadratischer, rechteckiger oder dreieckiger Querschnitt, des Hohlraums möglich.

In einem Ausführungsbeispiel der Erfindung ist vorgesehen, dass die Radfelge zwei voneinander getrennte Felgensegmente aufweist, welche sich bezogen auf eine zu der Rotationsachse orthogonalen Symmetrieebene des Scheibenrades spiegelbildlich gegenüberliegen und wobei die Felgensegmente durch die Radscheiben und das Felgenbett unter Ausbildung des zumindest einen Hohlraums miteinander verbunden sind. Die beiden Felgensegmente dienen dabei zur Aufnahme einer jeweiligen abschließenden Wulst des Reifens.

Ferner ist eine Ausführung günstig, bei welcher das jeweilige Felgensegment jeweils eine Felgenschulter aufweist. Die Felgenschultern sind durch das Felgenbett miteinander verbunden. Vorteilhaft daran ist, dass die Felgenschultern die Sitzfläche für den Reifenwulst ausbilden. Die jeweilige Felgenschulter stützt den Reifenfuß und sorgt für einen einwandfreien Halt des Reifens. Darüber hinaus ist es vorteilhaft, wenn die Felgenschulter zur Mitte des Scheibenrads geneigt ist.

In einer weiteren vorteilhaften Variante ist erfindungsgemäß vorgesehen, dass der zumindest eine Durchbruch als ein Langloch, quadratisch, rechteckig, elliptisch oder kreisförmig ausgebildet ist. Besonders vorteilhaft ist dabei eine Ausführungsform als Langloch, wodurch das Gewicht zusätzlich reduziert und gleichzeitig die Spannung in dem Felgenbett verringert ist. Dabei ist es besonders günstig, wenn ein Radius des Durchbruchs so groß wie möglich gewählt ist. Bei einem größeren Radius sinkt die Spannung im Radienbereich und die Kerbwirkung nimmt bei einer Vergrößerung des Radius ab. Somit steigt die Steifigkeit mit einer Radienerhöhung.

Das erfindungsgemäße Schiebenrad ist in einer Ausführungsvariante ausgebildet, dass sich die erste und die zweite Radscheibe von der Radfelge zumindest über ein Viertel der Strecke in einer Radialrichtung zwischen Radfelge und Radnabe zu der Radnabe erstrecken und weiter vorzugsweise über die Hälfte der Strecke zu der Radnabe erstrecken. Auf diese Weise ist der Hohlraum hinsichtlich der Erhöhung der Steifigkeit aufgrund des Reifendrucks optimal dimensioniert.

In einer alternativen Ausführung des vorliegenden Scheibenrads ist ferner vorgesehen, dass zumindest zwei Verstärkungsrippen in dem Hohlraum ausgebildet sind, welche sich von der ersten Radscheibe zu der zweiten Radscheibe erstrecken und diese, sowie insbesondere das Felgenbett, miteinander verbinden. Dabei sind die Verstärkungsrippen gleichmäßig um die Rotationsachse des Scheibenrades verteilt angeordnet. Dadurch kann das Gewicht der Radscheiben weiter reduziert werden, da deren Durchmesser verringert werden kann, nachdem die daraus resultierende geringere Steifigkeit des Scheibenrads durch die Verstärkungsrippen ausgeglichen bzw. erhöht wird.

In einer vorteilhaften Ausführungsvariante ist vorgesehen, dass jeweils zwischen zwei benachbarten Verstärkungsrippen der zumindest zwei Verstärkungsrippen jeweils ein Hohlraum und insbesondere jeweils ein Rippendurchbruch in der jeweiligen Verstärkungsrippe ausgebildet ist. Dabei ist günstig, dass jeweils benachbarte Hohlräume strömungstechnisch miteinander verbunden sind, wodurch sich der Innendruck des Reifens bei einer plötzlichen hohen äußeren Druckbelastung des Reifen besser und schneller in dem Hohlraum bzw. den Hohlräumen verteilt und somit Beschädigungen des Reifens vermieden werden können.

In einer bevorzugten Ausführungsform der Erfindung bildet zumindest eine Verstärkungsrippe einen zu der Radfelge offenen Rippenhohlraum aus. Ferner ist in dem Rippenhohlraum ein Sensor, insbesondere ein Reifendrucksensor, angeordnet und/oder in einer der beiden Radscheiben eine zu dem Rippenhohlraum der Verstärkungsrippe führende Öffnung vorgesehen ist, in welcher ein weiterer Sensor und/oder ein Ventil aufgenommen ist. Durch den Hohlraum bzw. durch die zu dem Hohlraum führende Öffnung in einer der Radscheiben, kann daher ein Sensor und/oder ein Ventil, durch welches der Reifen aufpumpbar ist, als Funktionselement in das Scheibenrad integriert werden.

In einem Ausführungsbeispiel der Erfindung umfasst das Scheibenrad zumindest zwei Speichen, welche sich jeweils von der ersten Radscheibe und der zweiten Radscheibe zu der Radnabe erstrecken und diese miteinander verbinden. Außerdem sind die Speichen gleichmäßig um die Rotationsachse des Scheibenrades verteilt angeordnet. Zwischen den Speichen kann hierbei ein von jeglichem Material freier Freiraum ausgebildet sein, durch welchen das Gewicht des Scheibenrades weiter reduziert wird.

In einer weiteren vorteilhaften Variante ist erfindungsgemäß vorgesehen, dass das Scheibenrad einteilig ausgebildet ist. Auf diese Weise ist die Steifigkeit des Scheibenrads besonders vorteilhaft.

Als Materialien für das Scheibenrad bzw. für die einteilig miteinander ausgebildeten Komponenten kommen insbesondere Aluminiumgusslegierungen, Stahl, aber auch faserverstärkte Materialien mit duroplastischer oder thermoplastischer Matrix in Frage. Entsprechend kann das Scheibenrad durch ein Gussverfahren, ein Sinterverfahren, ein Stahl-Schweißverfahren oder durch Verfahren zur Herstellung von Faserverbundbauteilen hergestellt werden. Als Gussverfahren kann insbesondere ein Rotations-Kokillenguss und/oder ein Kokillenguss mit mehreren, insbesondre zwei, Sandkernen verwendet werden.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine Schnittansicht eines Scheibenrads für ein Fahrzeug;
- Fig. 2: eine Aufsicht des Scheibenrads für ein Fahrzeug und
- Fig. 3: eine schematische Ansicht des Scheibenrads für ein Fahrzeug.

Die Figuren sind beispielhaft schematisch. Gleiche Bezugszeichen in den Figuren weisen auf gleiche funktionale und/oder strukturelle Merkmale hin.

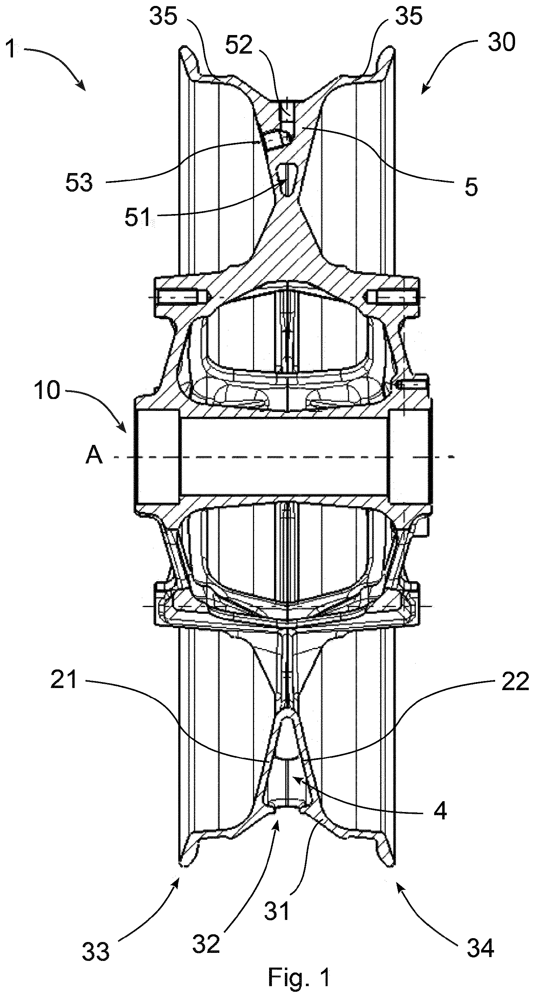

In Figur 1 ist eine Schnittansicht eines Scheibenrads 1 für ein einspuriges Kraftfahrzeug dargestellt. Das Scheibenrad 1 ist einteilig ausgebildet und umfasst eine konzentrisch zu einer Rotationsachse A des Scheibenrades 1 angeordnete Radnabe 10 zur Montage des Scheibenrades 1 an dem Fahrzeug, eine dazu ebenfalls konzentrischen Radfelge 30 sowie eine erste und eine zweite Radscheibe 21, 22. Die erste Radscheibe 21 und die zweite Radscheibe 22 sind an der Radfelge 30 in eine zu der Rotationsachse A des Scheibenrades 1 parallelen Querrichtung zueinander beabstandet ausgebildet und erstrecken sich jeweils von der Radfelge 30 in Richtung der Radnabe 10. Außerdem laufen die Radscheiben 21, 22 in Richtung der Radnabe 10 hin derart aufeinander zu und sind miteinander verbunden, dass zwischen den Radscheiben 21, 22 und der Radfelge 30 ein Hohlraum 4 ausgebildet ist. Ferner sind der zumindest eine Hohlraum 4 zwischen den beiden Radscheiben 21, 22 und das Felgenbett 31 in einem Querschnitt v-förmig ausgebildet.

Darüber hinaus ist in einem Felgenbett 31 der Radfelge 30 zumindest ein Durchbruch 32 zu dem zumindest einen Hohlraum 4 ausgebildet, wodurch dieser strömungstechnisch mit einem auf die Radfelge aufziehbaren Reifen bzw. dessen Innenraum verbindbar ist, sodass in dem Hohlraum der Innendruck des Reifens herrscht. Der jeweilige Durchbruch 32 ist in Querrichtung mittig in dem Felgenbett 31 ausgebildet.

Außerdem weist die Radfelge 30 zwei voneinander getrennte Felgensegmente 33, 34 auf, welche sich bezogen auf eine zu der Rotationsachse A orthogonalen Symmetrieebene des Scheibenrades 1 spiegelbildlich gegenüberliegen. Des Weiteren sind die Felgensegmente 33, 34 durch die Radscheiben 21, 22 und das Felgenbett 31 unter Ausbildung des zumindest einen Hohlraums 4 miteinander verbunden. Das jeweilige Felgensegment 31, 32 weist jeweils eine Felgenschulter 35 auf und die Felgenschultern 35 sind durch das Felgenbett 31 miteinander verbunden.

In dem Hohlraum 4 des Scheibenrads 1 sind drei Verstärkungsrippen 5 ausgebildet, wobei in Figur 1 lediglich eine der Verstärkungsrippen dargestellt ist. Die Verstärkungsrippen 5 erstrecken sich von der ersten Radscheibe 21 zu der zweiten Radscheibe 22 und verbinden diese, sowie das Felgenbett 31 miteinander. Außerdem sind die Verstärkungsrippen 5 gleichmäßig um die Rotationsachse A des Scheibenrades 1 verteilt angeordnet sind. Jeweils zwischen zwei benachbarten Verstärkungsrippen 5 der ist ein Hohlraum 4 ausgebildet und die jeweilige Verstärkungsrippe 5 umfasst jeweils einen Rippendurchbruch 51, wodurch die benachbarten Hohlräume 4 strömungstechnisch direkt miteinander verbunden sind.

Die in Figur 1 dargestellte Verstärkungsrippe 5 bildet einen zu der Radfelge 30 offenen Rippenhohlraum 52 aus. In dem Rippenhohlraum 52 ist ein Reifendrucksensor angeordnet und in der ersten Radscheibe 21 ist eine zu dem Rippenhohlraum 52 führende Öffnung 53 vorgesehen, in welcher ein Ventil aufgenommen ist.

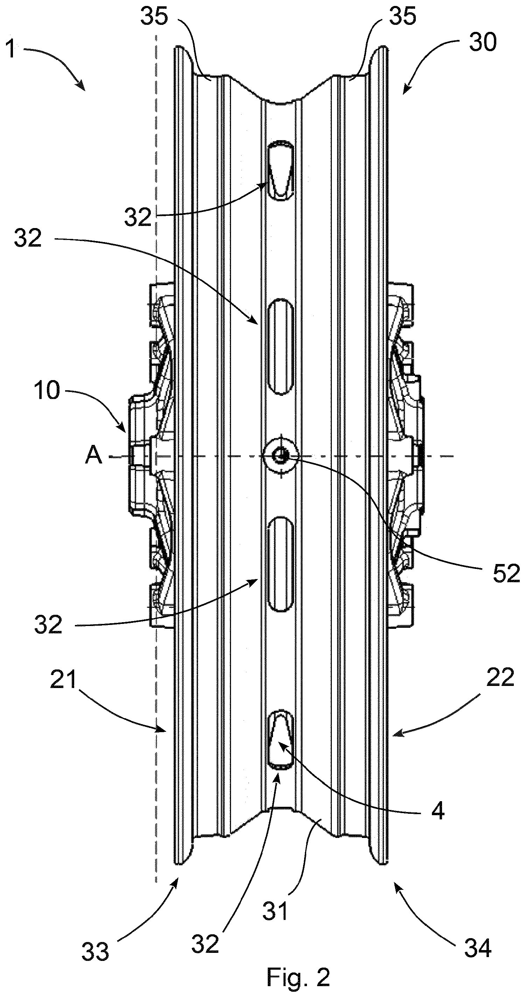

Figur 2 zeigt eine Aufsicht des Scheibenrads 1 für ein einspuriges Kraftfahrzeug. Nachdem es sich dabei um das in Figur 1 dargestellte Scheibenrad 1 handelt, wird im Folgenden lediglich auf Merkmale eingegangen, welche in Figur 1 nicht gezeigt sind.

Entsprechend ist in Figur 2 zu erkennen, dass in dem Felgenbett 31 der Radfelge 30 eine Vielzahl von Durchbrüchen 32 ausgebildet ist. Die Vielzahl von Durchbrüchen 32 ist in einer Umfangsrichtung des Felgenbetts 31 gleichmäßig zueinander beabstandet angeordnet. Außerdem ist der jeweilige Durchbruch 32 als ein Langloch ausgebildet ist.

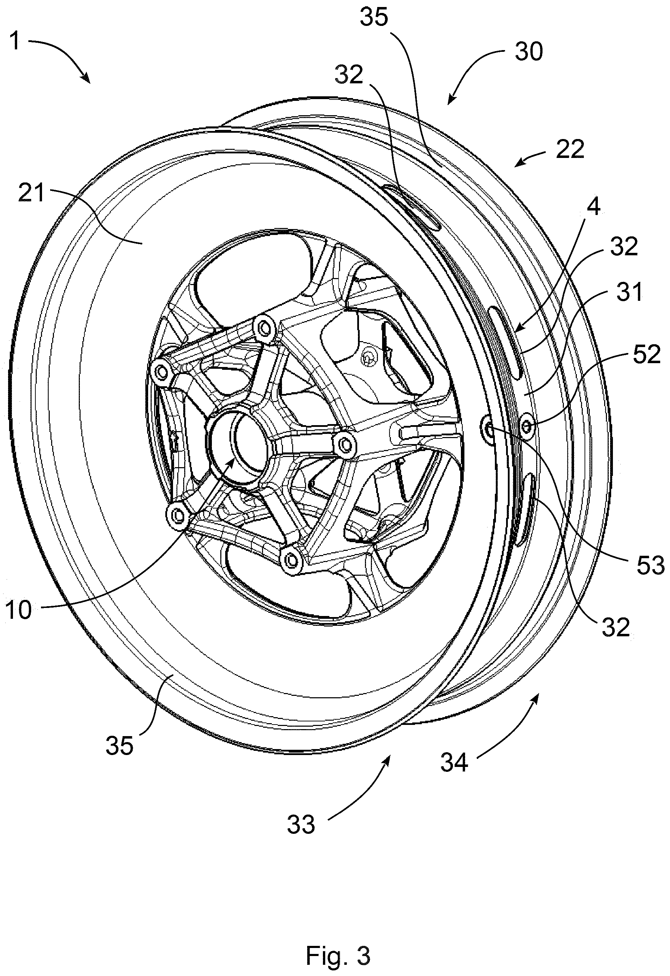

In Figur 3 ist eine perspektivische Ansicht des in Figur 1 und 2 dargestellten Scheibenrads 1 dargestellt. Dementsprechend wir ebenfalls nur auf Merkmale eingegangen, welche in den vorstehenden Figuren 1 und 2 nicht gezeigt sind.

Dabei erstrecken sich die erste und die zweite Radscheibe 21, 22 von der Radfelge 30 in etwas über ein Viertel der Strecke in einer Radialrichtung zwischen Radfelge 30 und Radnabe 10 zu der Radnabe 10. Darüber hinaus umfasst das Scheibenrad 1 fünf Speichen 60, welche sich jeweils von der ersten Radscheibe 21 und der zweiten Radscheibe 22 zu der Radnabe 10 erstrecken und diese miteinander verbinden. Ferner sind die Speichen 60 gleichmäßig um die Rotationsachse A des Scheibenrades 1 verteilt angeordnet.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Scheibenrad (1) für ein, insbesondere einspuriges Kraft-, Fahrzeug,
mit einer konzentrisch zu einer Rotationsachse (A) des Scheibenrades (1) angeordneten Radnabe (10) zur Montage des Scheibenrades (1) an dem Fahrzeug, einer dazu ebenfalls konzentrischen Radfelge (30) sowie einer ersten und einer zweiten Radscheibe (21, 22),
wobei die erste Radscheibe (21) und die zweite Radscheibe (22) an der Radfelge (30) in eine zu der Rotationsachse (A) des Scheibenrades (1) parallelen Querrichtung zueinander beabstandet ausgebildet sind und sich jeweils von der Radfelge (30) in Richtung der Radnabe (10) erstrecken,
wobei die Radscheiben (21, 22) in Richtung der Radnabe (10) hin derart aufeinander zulaufen und miteinander verbunden sind, dass zwischen den Radscheiben (21, 22) und der Radfelge (30) zumindest ein Hohlraum (4) ausgebildet ist,
wobei in einem Felgenbett (31) der Radfelge (30) zumindest ein Durchbruch (32) zu dem zumindest einen Hohlraum (4) ausgebildet ist, **dadurch gekennzeichnet, dass**
in dem Felgenbett (31) der Radfelge (30) eine Vielzahl von Durchbrüchen (32) ausgebildet ist.

2. Scheibenrad (1) gemäß Anspruch 1, wobei die Vielzahl von Durchbrüchen (32) in einer Umfangsrichtung des Felgenbetts (31) gleichmäßig zueinander beabstandet angeordnet sind.

3. Scheibenrad (1) gemäß einem der Ansprüche 1 oder 2, wobei der jeweilige Durchbruch (32) in Querrichtung mittig in dem Felgenbett (31) ausgebildet ist.

4. Scheibenrad (1) gemäß einem der vorhergehenden Ansprüche, wobei der zumindest eine Hohlraum (4) zwischen den beiden Radscheiben (21, 22) und/oder das Felgenbett (31) in einem Querschnitt v-förmig oder u-förmig ausgebildet sind.

5. Scheibenrad (1) gemäß einem der vorhergehenden Ansprüche, wobei die Radfelge (30) zwei voneinander getrennte Felgensegmente (33, 34) aufweist, welche sich bezogen auf eine zu der Rotationsachse (A) orthogonalen Symmetrieebene des Scheibenrades (1) spiegelbildlich gegenüberliegen und wobei die Felgensegmente (33, 34) durch die Radscheiben (21, 22) und das Felgenbett (31) unter Ausbildung des zumindest einen Hohlraums (4) miteinander verbunden sind.

6. Scheibenrad (1) gemäß dem vorhergehenden Anspruch, wobei das jeweilige Felgensegment (31, 32) jeweils eine Felgenschulter (35) aufweist, wobei die Felgenschultern (35) durch das Felgenbett (31) miteinander verbunden sind.

7. Scheibenrad (1) gemäß einem der vorhergehenden Ansprüche, wobei der zumindest eine Durchbruch (32) als ein Langloch, quadratisch, rechteckig oder kreisförmig ausgebildet ist.

8. Scheibenrad (1) gemäß einem der vorhergehenden Ansprüche, wobei sich die erste und die zweite Radscheibe (21, 22) von der Radfelge (30) zumindest über ein Viertel der Strecke in einer Radialrichtung zwischen Radfelge (30) und Radnabe (10) zu der Radnabe (10) erstrecken.

9. Scheibenrad (1) gemäß einem der vorhergehenden Ansprüche, wobei zumindest zwei Verstärkungsrippen (5) in dem Hohlraum (4) ausgebildet sind, welche sich von der ersten Radscheibe (21) zu der zweiten Radscheibe (22) erstrecken und diese, sowie insbesondere das Felgenbett (31), miteinander verbinden, und wobei die Verstärkungsrippen (5) gleichmäßig um die Rotationsachse (A) des Scheibenrades (1) verteilt angeordnet sind.

10. Scheibenrad (1) gemäß dem vorhergehenden Anspruch, wobei jeweils zwischen zwei benachbarten Verstärkungsrippen (5) der zumindest zwei Verstärkungsrippen (5) jeweils ein Hohlraum (4) ausgebildet ist, wobei insbesondere jeweils ein Rippendurchbruch (51) in der jeweiligen Verstärkungsrippe (5) ausgebildet ist.

11. Scheibenrad (1) gemäß einem der vorhergehenden Ansprüche, wobei zumindest eine Verstärkungsrippe (5) einen zu der Radfelge (30) offenen Rippenhohlraum (52) ausbildet, wobei in dem Rippenhohlraum (52) ein Sensor, insbesondere ein Reifendrucksensor, angeordnet ist und/oder in einer der beiden Radscheiben (21, 22) eine zu dem Rippenhohlraum (52) der Verstärkungsrippe (5) führende Öffnung (53) vorgesehen ist, in welcher ein weiterer Sensor und/oder ein Ventil aufgenommen ist.

12. Scheibenrad (1) gemäß einem der vorhergehenden Ansprüche, ferner umfassend zumindest zwei Speichen (60), welche sich jeweils von der ersten Radscheibe (21) und der zweiten Radscheibe (22) zu der Radnabe (10) erstrecken und diese miteinander verbinden, wobei die Speichen (60) gleichmäßig um die Rotationsachse (A) des Scheibenrades (1) verteilt angeordnet sind.

13. Scheibenrad (1) gemäß einem der vorhergehenden Ansprüche, wobei das Scheibenrad (1) einteilig ausgebildet ist.

## Claims

1. Disc wheel (1) for a, particularly single-track, motor vehicle,
with a wheel hub (10) arranged concentrically to a rotation axis (A) of the disc wheel (1) for mounting the disc wheel (1) on the vehicle, an equally concentric wheel rim (30) as well as a first and a second wheel disc (21, 22),
wherein the first wheel disc (21) and the second wheel disc (22) are formed at the wheel rim (30) spaced apart from each other in a transverse direction parallel to the rotation axis (A) of the disc wheel (1) and each extend from the wheel rim (30) in the direction of the wheel hub (10),
wherein the wheel discs (21, 22) converge towards each other in the direction of the wheel hub (10) and are connected with each other such that at least one cavity (4) is formed between the wheel discs (21, 22) and the wheel rim (30),
wherein in a rim bed (31) of the wheel rim (30) at least one breakthrough (32) to the at least one cavity (4) is formed, **characterized in that**
a plurality of breakthroughs (32) is formed in the rim bed (31) of the wheel rim (30).

2. Disc wheel (1) according to claim 1, wherein the plurality of breakthroughs (32) are arranged equally spaced from each other in a circumferential direction of the rim bed (31).

3. Disc wheel (1) according to one of claims 1 or 2, wherein the respective breakthrough (32) is formed centrally in the transverse direction in the rim bed (31).

4. Disc wheel (1) according to one of the preceding claims, wherein the at least one cavity (4) between the two wheel discs (21, 22) and/or the rim bed (31) are formed in a v-shape or u-shape in cross-section.

5. Disc wheel (1) according to one of the preceding claims, wherein the wheel rim (30) has two separate rim segments (33, 34), which are positioned mirror-symmetrically with respect to a symmetry plane orthogonal to the rotation axis (A) of the disc wheel (1), and wherein the rim segments (33, 34) are connected to each other by the wheel discs (21, 22) and the rim bed (31) forming the at least one cavity (4).

6. Disc wheel (1) according to the preceding claim, wherein the respective rim segment (31, 32) each has a rim shoulder (35), wherein the rim shoulders (35) are connected to each other by the rim bed (31).

7. Disc wheel (1) according to one of the preceding claims, wherein the at least one breakthrough (32) is formed as an elongated hole, square, rectangular or circular.

8. Disc wheel (1) according to one of the preceding claims, wherein the first and the second wheel disc (21, 22) extend from the wheel rim (30) at least over a quarter of the distance in a radial direction between wheel rim (30) and wheel hub (10) to the wheel hub (10).

9. Disc wheel (1) according to one of the preceding claims, wherein at least two reinforcement ribs (5) are formed in the cavity (4), which extend from the first wheel disc (21) to the second wheel disc (22) and connect these, as well as particularly the rim bed (31), with each other, and wherein the reinforcement ribs (5) are arranged distributed uniformly around the rotation axis (A) of the disc wheel (1).

10. Disc wheel (1) according to the preceding claim, wherein between each two adjacent reinforcement ribs (5) of the at least two reinforcement ribs (5), a cavity (4) is formed in each case, wherein particularly a rib breakthrough (51) is formed in the respective reinforcement rib (5).

11. Disc wheel (1) according to one of the preceding claims, wherein at least one reinforcement rib (5) forms a rib cavity (52) open to the wheel rim (30), wherein a sensor, particularly a tire pressure sensor, is arranged in the rib cavity (52) and/or an opening (53) leading to the rib cavity (52) of the reinforcement rib (5) is provided in one of the two wheel discs (21, 22), in which a further sensor and/or a valve is accommodated.

12. Disc wheel (1) according to one of the preceding claims, further comprising at least two spokes (60), which each extend from the first wheel disc (21) and the second wheel disc (22) to the wheel hub (10) and connect these with each other, wherein the spokes (60) are arranged distributed uniformly around the rotation axis (A) of the disc wheel (1).

13. Disc wheel (1) according to one of the preceding claims, wherein the disc wheel (1) is formed in one piece.

## Revendications

1. Roue à disque (1) pour un véhicule à moteur, en particulier monocycle,
comprenant un moyeu de roue (10) disposé concentriquement à un axe de rotation (A) de la roue à disque (1) pour le montage de la roue à disque (1) sur le véhicule, une jante de roue (30) également concentrique à celui-ci ainsi qu'un premier et un deuxième disque de roue (21, 22),
le premier disque de roue (21) et le deuxième disque de roue (22) étant formés sur la jante de roue (30) espacés l'un de l'autre dans une direction transversale parallèle à l'axe de rotation (A) de la roue à disque (1) et s'étendant chacun de la jante de roue (30) en direction du moyeu de roue (10),
les disques de roue (21, 22) convergeant l'un vers l'autre en direction du moyeu de roue (10) et étant reliés l'un à l'autre de telle sorte qu'au moins une cavité (4) est formée entre les disques de roue (21, 22) et la jante de roue (30),
au moins une percée (32) vers la au moins une cavité (4) étant formée dans un lit de jante (31) de la jante de roue (30), **caractérisée en ce que**
une pluralité de percées (32) est formée dans le lit de jante (31) de la jante de roue (30).

2. Roue à disque (1) selon la revendication 1, dans laquelle la pluralité de percées (32) sont disposées uniformément espacées les unes des autres dans une direction circonférentielle du lit de jante (31).

3. Roue à disque (1) selon l'une des revendications 1 ou 2, dans laquelle la percée respective (32) est formée au centre dans la direction transversale dans le lit de jante (31).

4. Roue à disque (1) selon l'une des revendications précédentes, dans laquelle la au moins une cavité (4) entre les deux disques de roue (21, 22) et/ou le lit de jante (31) sont formés en forme de v ou en forme de u en coupe transversale.

5. Roue à disque (1) selon l'une des revendications précédentes, dans laquelle la jante de roue (30) comprend deux segments de jante séparés (33, 34), qui sont disposés en miroir par rapport à un plan de symétrie orthogonal à l'axe de rotation (A) de la roue à disque (1), et dans laquelle les segments de jante (33, 34) sont reliés l'un à l'autre par les disques de roue (21, 22) et le lit de jante (31) en formant la au moins une cavité (4).

6. Roue à disque (1) selon la revendication précédente, dans laquelle le segment de jante respectif (31, 32) comprend chacun un épaulement de jante (35), les épaulements de jante (35) étant reliés l'un à l'autre par le lit de jante (31).

7. Roue à disque (1) selon l'une des revendications précédentes, dans laquelle la au moins une percée (32) est formée comme un trou oblong, carré, rectangulaire ou circulaire.

8. Roue à disque (1) selon l'une des revendications précédentes, dans laquelle le premier et le deuxième disque de roue (21, 22) s'étendent de la jante de roue (30) au moins sur un quart de la distance dans une direction radiale entre la jante de roue (30) et le moyeu de roue (10) vers le moyeu de roue (10).

9. Roue à disque (1) selon l'une des revendications précédentes, dans laquelle au moins deux nervures de renforcement (5) sont formées dans la cavité (4), qui s'étendent du premier disque de roue (21) au deuxième disque de roue (22) et les relient, ainsi que notamment le lit de jante (31), l'un à l'autre, et dans laquelle les nervures de renforcement (5) sont disposées uniformément réparties autour de l'axe de rotation (A) de la roue à disque (1).

10. Roue à disque (1) selon la revendication précédente, dans laquelle entre deux nervures de renforcement adjacentes (5) des au moins deux nervures de renforcement (5), une cavité (4) est formée dans chaque cas, notamment une percée de nervure (51) étant formée dans la nervure de renforcement respective (5).

11. Roue à disque (1) selon l'une des revendications précédentes, dans laquelle au moins une nervure de renforcement (5) forme une cavité de nervure (52) ouverte vers la jante de roue (30), dans laquelle un capteur, notamment un capteur de pression des pneus, est disposé dans la cavité de nervure (52) et/ou une ouverture (53) menant à la cavité de nervure (52) de la nervure de renforcement (5) est prévue dans l'un des deux disques de roue (21, 22), dans laquelle un autre capteur et/ou une valve est logé.

12. Roue à disque (1) selon l'une des revendications précédentes, comprenant en outre au moins deux rayons (60), qui s'étendent chacun du premier disque de roue (21) et du deuxième disque de roue (22) au moyeu de roue (10) et les relient l'un à l'autre, les rayons (60) étant disposés uniformément répartis autour de l'axe de rotation (A) de la roue à disque (1).

13. Roue à disque (1) selon l'une des revendications précédentes, dans laquelle la roue à disque (1) est formée d'une seule pièce.
